# EUROPEAN PATENT APPLICATION

(11) **EP 2 725 690 A2**
(43) Date of publication of application: **30.04.2014**
(21) Application number: 13190027.6
(22) Date of filing: 24.10.2013
(51) Int. Cl.: H02K 9/16

(54) **Cooling of a dynamo-electric machine**

(30) Priority: 24.10.2012 JP 2012234778
(71) Applicant: Hitachi Ltd., Tokyo 100-8280 (JP)
(72) Inventor: Sugimoto, Shinji, Tokyo, 100-8280 (JP); Komura, Akiyoshi, Tokyo, 100-8280 (JP); Masuda, Seikichi, Tokyo, 100-8280 (JP); Fujieda, Masayasu, Tokyo, 100-8280 (JP); Endou, Mikio, Tokyo, 100-8280 (JP); Koike, Masatoshi, Tokyo, 100-8280 (JP)
(74) Representative: MERH-IP Matias Erny Reichl Hoffmann

(57) **Abstract**

The dynamo-electric machine includes: a stator (2) having a stator winding (5) wound around a stator core (4); a rotor (3) having a rotor core (7) and a rotating shaft (8) rotatably retaining the rotor core (7); and a housing (11) rotatably retaining the rotor (3) to the stator (2). The rotor (3) has a cooling hole formed in the rotor core (7) in a rotating shaft direction of the rotor (3), and a fan (50) arranged at one end of the rotating shaft (8). The housing (11) has ventilation holes (57, 58) formed in one end and the other end in an axial direction of an outer peripheral surface thereof to allow the inside and the outside of the housing (11) to communicate with each other, a ventilation passage (30) connecting these ventilation holes outside the housing (11), and an opening/closing member (60) arranged in a discharge port to the atmosphere of the ventilation passage.

## Description

### CLAIM OF PRIORITY

The present application claims priority from Japanese patent application JP 2012-234778 filed on October 24, 2012, the content of which is hereby incorporated by reference in this application.

### BACKGROUND

### 1. Technical Field

The present invention relates to a dynamo-electric machine, and more particularly to a cooling structure for a dynamo-electric machine.

### 2. Related Art

In general, as for cooling methods using air in a dynamo-electric machine, there are the following methods: (1) a method for cooling by introducing air into the dynamo-electric machine by a blower disposed outside of the dynamo-electric machine; (2) a method for cooling by introducing air outside of the dynamo-electric machine into the dynamo-electric machine by a fan disposed in the dynamo-electric machine; (3) a method for cooling by circulating the air in the dynamo-electric machine by the fan disposed in the dynamo-electric machine; (4) a method for cooling by sending the air outside of the dynamo-electric machine to an outer surface of the dynamo-electric machine by the fan disposed outside of the dynamo-electric machine; and (5) a method for cooling with a combination of the cooling methods (3) and (4).

When the cooling methods (1) and (2) are performed by an open motor and the cooling methods (3) to (5) are performed by an enclosed motor, in general, there are the following features. In comparison with the dynamo-electric machine as the open motor, since the dynamo-electric machine as the enclosed motor is covered with a frame, dust is less likely to intrude into the dynamo-electric machine as the enclosed motor and noise is small. For this reason, the dynamo-electric machine as the enclosed motor has excellent environment resistance performance. On the other hand, in comparison with the cooling methods performed by the open motor, the cooling methods performed by the enclosed motor have poor cooling performance because an exhaust heat area is small. In general, the dynamo-electric machine as the enclosed motor is enlarged in comparison with the dynamo-electric machine as the open motor.

In order to address the problems, Japanese Unexamined Patent Publication No. 2007-68317 and Japanese Unexamined Patent Publication No. H6-311692 disclose a cooling method for adjusting air volume introduced into the dynamo-electric machine by ambient temperature.

In the cooling method disclosed in Japanese Unexamined Patent Publication No. 2007-68317 and Japanese Unexamined Patent Publication No. H6-311692, an air volume adjustment mechanism is provided in a suction port for sucking cooling air from the outside of the dynamo-electric machine into the dynamo-electric machine as the open motor in order to adjust the air volume of the cooling air to be sucked by the ambient temperature. Also, intrusion of snow or rain is prevented, and noise is reduced. Additionally, Japanese Unexamined Patent Publication No. H9-331649 discloses a fully enclosed motor for a vehicle, configured as follows. A pair of openings 6c is formed in an upper part of a main frame 6A, and an opening/closing valve 10 is fixed to the openings 6c. The opening/closing valve 10 is provided with a valve plate 12 in a swingable manner through a pin 12a. A coil 10a and a core 10b are attached to a lower surface of an upper portion of a ventilation frame 8 of the opening/closing valve 10. A temperature detector 17 is attached to a stator coil 1. When a detection signal from the temperature detector 17 is sent to an operating room and exceeds a predetermined value, the coil 10a of the opening/closing valve 10 is excited, the valve plate 12 is opened, and outside air is introduced to the inside of the main frame 6A.

### SUMMARY

However, the structure disclosed in Japanese Unexamined Patent Publication No. 2007-68317 and Japanese Unexamined Patent Publication No. H6-311692 is a structure with one of an intake side and an exhaust side closed. As a result, snow or the like intrudes from a suction port or a discharge port on a side not to be closed.

A technology disclosed in Japanese Unexamined Patent Publication No. H9-331649 can prevent intrusion of snow. However, Japanese Unexamined Patent Publication No. H9-331649 has no mention of the cooling structure in case where a structure for preventing intrusion of snow by closing the opening/closing valve is employed.

The prevent invention has been achieved under these problems, and an object of the prevent invention is to provide a dynamo-electric machine that prevents intrusion of snow or the like and also ensures sufficient cooling performance.

In order to address the problems, the following measure is employed.

A dynamo-electric machine includes: a stator that has a stator winding wound around a stator core; a rotor that has a rotor core and a rotating shaft rotatably retaining the rotor core; and a housing that surrounds a periphery and a side surface of the stator and that houses the rotor while rotatably retaining the rotor with respect to the stator. The rotor is provided with a cooling hole formed in the rotor core in a direction of the rotating shaft of the rotor, and a fan arranged at one end of the rotating shaft. The housing is provided with ventilation holes that are formed in one end and the other end in an axial direction of an outer peripheral surface of the housing in order to allow the inside and the outside of the housing to communicate with each other, a ventilation passage connecting these ventilation holes outside the housing, and/or an opening/closing member that is arranged in a discharge port to the atmosphere of the ventilation passage.

The present invention has the above-described structure. For this reason, a dynamo-electric machine that prevents intrusion of snow or the like and also ensures sufficient cooling performance is provided.

### BRIEF DESCRIPTION OF THE DRAWINGS

Embodiments of the present invention will be described in detail based on the following drawings, in which:
FIG. 1 is an axial cross-sectional view of a dynamo-electric machine according to a first embodiment (a view showing a state where a discharge port 55 for cooling air is closed);
FIG. 2 is an axial cross-sectional view (a view showing a state where the discharge port 55 for the cooling air is opened);
FIG. 3 is a diagram showing a cross-section A-A in FIG. 2;
FIG. 4 is an axial cross-sectional view of a dynamo-electric machine according to a second embodiment (a view showing a state where a ventilation passage 31 for sending outside air is opened);
FIG. 5 is an axial cross-sectional view (a view showing a state where the ventilation passage 31 for sending the outside air is closed);
FIG. 6 is a diagram showing a cross-section A-A in FIG. 5;
FIG. 7 is an axial cross-sectional view of a dynamo-electric machine according to a third embodiment (a view showing a state where an intake ventilation passage 57a and a discharge port 55 are opened);
FIG. 8 is an axial cross-sectional view (a view showing a state where the intake ventilation passage 57a and the discharge port 55 are closed); and
FIG. 9 is a diagram illustrating a fourth embodiment.

### DETAILED DESCRIPTION

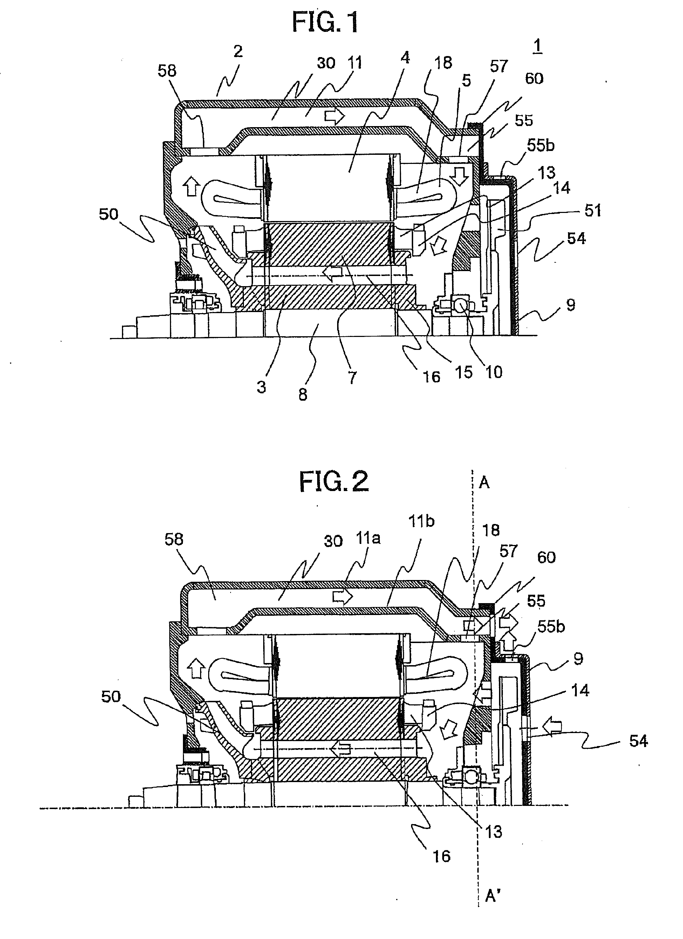

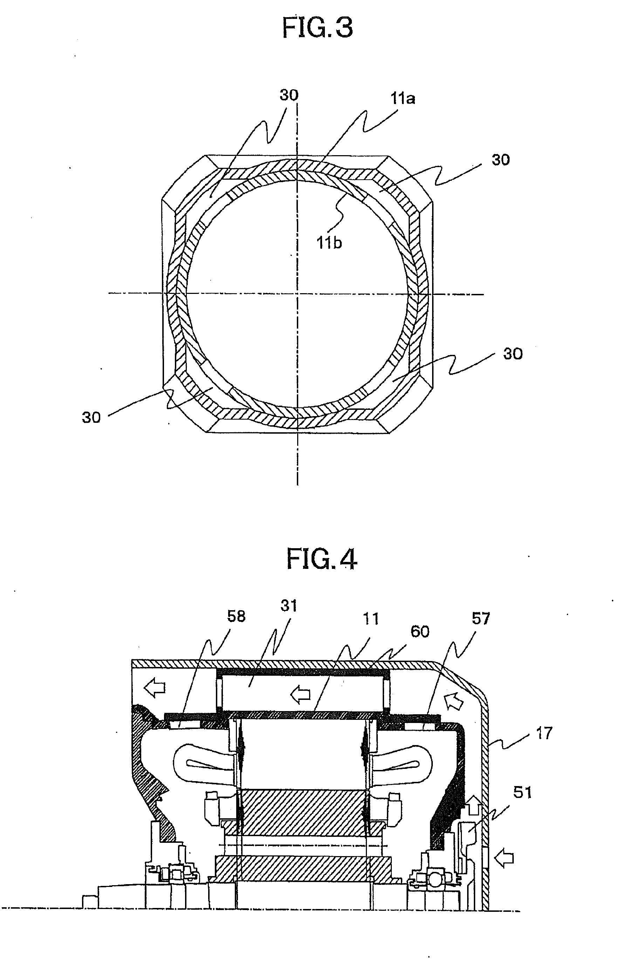

Hereinafter, embodiments will be described with reference to the accompanying drawings. FIGs. 1, 2 and 3 are views illustrating a dynamo-electric machine 1 according to a first embodiment of the present invention, FIG. 1 is an axial cross-sectional view (a view showing a state where a discharge port 55 for cooling air is closed), FIG. 2 is an axial cross-sectional view (a view showing a state where the discharge port 55 for the cooling air is opened), and FIG. 3 is a diagram showing a cross-section A-A in FIG. 2. It should be noted that in FIGs. 1, 2 and 3, the dynamo-electric machine 1 functions as an induction motor.

A stator 2 of the dynamo-electric machine 1 is provided with a stator core 4, a multiphase stator winding 5 wound around the stator core 4, an a housing 11 retaining the stator core 4 by an inner peripheral surface of the housing 11. A rotor 3 is provided with a rotor core 7, a shaft 8, and a bearing 10. The bearing 10 rotatably retains the rotor 3 with respect to the housing 11. An outer fan 51 is provided at one end of the rotor 3, and is surrounded with an end bracket 9 fixed to the housing 11. The rotor 3 rotates in a clockwise direction or a counterclockwise direction, and is operated as a motor.

The rotor core 7 composing the rotor 3 is formed with a rotor ventilation hole 16, the rotor ventilation hole 16 ventilating the inside of the rotor 3 in order to cool the rotor 3, and axially penetrating through the rotor core 7. Hereat, the rotor core 7 is axially fixed by an end plate 15 for holding the rotor core 7, and also the end plate 15 is provided with the rotor ventilation hole 16, the rotor ventilation hole 16 axially penetrating through the end plate 15. Additionally, the rotor 3 is attached with a fan 50.

A ventilation path in the dynamo-electric machine 1 by the fan 50 will be described using FIG. 2. It should be noted that FIG. 2 shows a state where an intake port 54 and the discharge port 55 are opened.

In FIG. 2, outside air is introduced from the intake port 54 formed in the end bracket 9 into the dynamo-electric machine 1 by the fan 50, and is discharged from the discharge port 55 through the rotor ventilation hole 16, a ventilation port 58 on a discharge side, and a ventilation passage 30. In this case, a coil end 18, an end ring 14, and the rotor core 7 are cooled. Besides, a bar (a secondary conductor) 13 is cooled through the rotor core 7 by cooling air passing through the rotor ventilation hole 16.

In the first embodiment, as shown in FIGs. 1, 2 and 3, a plurality of ventilation passages 30 for circulating inside air (four in FIG. 3) are formed in a direction of a rotating shaft between the stator core 4 and the housing 11. Ventilation ports 57, 58 communicating with inside air within the housing 11 are formed in one end and the other end of each of the ventilation passages 30. Also, an opening/closing member 60 is provided for opening/closing the discharge port 55, and a discharge port 55b and the intake port 54 formed in the end bracket 9. The opening/closing member 60 is formed into, for example, a shutter-like perforated plate. The discharge port 55, and the discharge port 55b and the intake port 54 formed in the end bracket 9, are simultaneously opened/closed by turning the opening/closing member 60 around the rotating shaft.

The housing 11 has, for example, a double structure composed of an inner housing 11b and an outer housing 11a, and the outer housing 11a is formed with a plurality of swelling portions radially swelling along the rotating shaft. With this structure, the ventilation passages 30 are formed between the inner housing 11b and the outer housing 11a. Besides, the ventilation ports 57, 58 for allowing the ventilation passages 30 and the inside of the dynamo-electric machine 1 to communicate with each other are formed in both the ends in the direction of the rotating shaft of the inner housing 11b forming the ventilation passages 30.

The ventilation path in the dynamo-electric machine 1 by the fan 50 will be described using FIGs. 1 and 2. FIG. 1 shows a state where the discharge ports 55 and 55b, and the intake port 54 respectively formed in the one end of each of the ventilation passages 30 are closed, and FIG. 2 shows a state where the discharge ports 55 and 55b, and the intake port 54 respectively formed in the one end of each of the ventilation passages 30 are opened.

With the discharge ports 55 and 55b opened, the outside air is introduced from the intake port 54 into the dynamo-electric machine 1 by the fan 50, and the introduced outside air is discharged from the discharge port 55 through the rotor ventilation hole 16 and the ventilation passages 30. In this case, the coil end 18, the end ring 14, and the rotor core 7 are cooled. Besides, the bar 13 is cooled through the rotor core 7 when passing through the rotor ventilation hole 16.

When the opening/closing member 60 is turned to close the intake port 54 and the discharge ports 55 and 55b, air in the dynamo-electric machine 1 is led to flow by the fan 50. In this case, the air is circulated through the ventilation passages 30 for circulating the inside air, the coil end 18, and the rotor ventilation hole 16. Herewith, the inside of the dynamo-electric machine 1 is cooled. That is, even with the intake port 54 and the discharge ports 55 and 55b closed, the inside of the dynamo-electric machine 1 can be cooled, and miniaturization of the dynamo-electric machine 1 is achieved.

It should be noted that the discharge ports 55 and 55b, and the intake port 54, can be simultaneously opened/closed by rotatively driving, for example, the opening/closing member 60, around the rotating shaft.

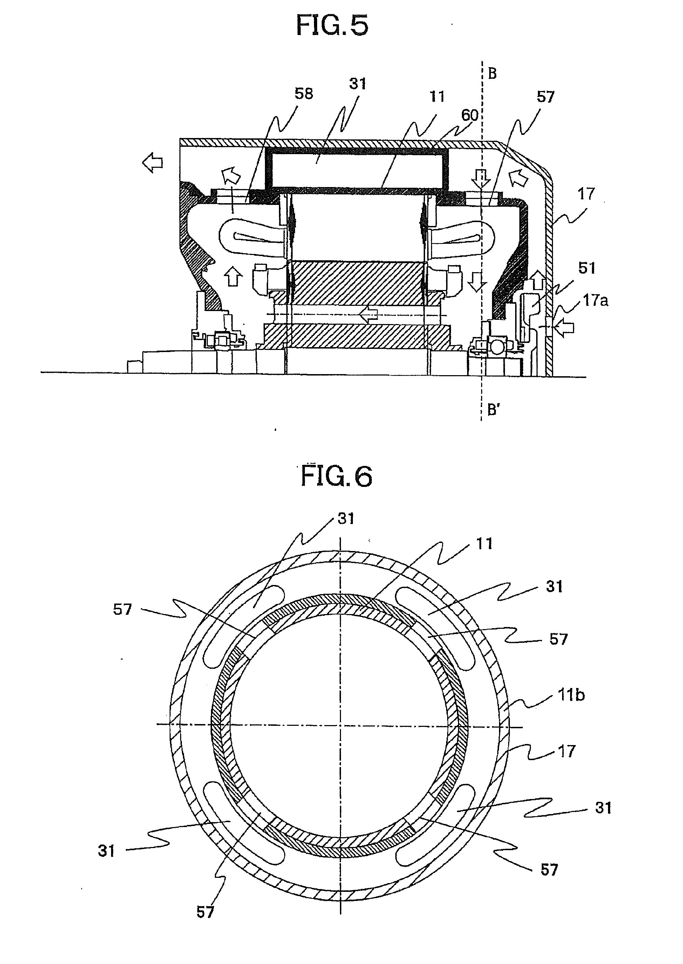

Next, a second embodiment of the present invention will be described using FIGs. 4, 5 and 6. FIG. 4 is an axial cross-sectional view (a view showing a state where a ventilation passage 31 for sending outside air is opened), FIG. 5 is an axial cross-sectional view (a view showing a state where the ventilation passage 31 for sending the outside air is closed), and FIG. 6 is a diagram showing a cross-section A-A in FIG. 5.

In the second embodiment, the cylindrical ventilation passage 31 for sending the outside air is formed in a periphery of a housing 11, and the outside air sucked through an intake port 17a by an outer fan 51 is led to flow to the ventilation passage 31, thereby cooling a dynamo-electric machine 1 through the ventilation passage 31.

As shown in FIGs. 4, 5 and 6, a plurality of ventilation passages 31 for sending the outside air (four in FIG. 6) are formed in the periphery of the housing 11, and the housing 11 and the ventilation passages 31 are housed in a casing 17. Also, the housing 11 is formed with intake ventilation ports 57 and exhaust ventilation ports 58.

With the second embodiment, when the ventilation passages 31 are opened and the intake ventilation ports 57 and the discharge ventilation ports 58 are closed, the outside air sucked through the intake port 17a by the outer fan 51 is led to flow to the ventilation passages 31 for sending the outside air outside the dynamo-electric machine 1. With this structure, a surface of the dynamo-electric machine 1 is cooled. Also, with the ventilation passages 31 closed and the intake ventilation ports 57 and the discharge ventilation ports 58 opened, the outside air is discharged to the outside through the intake ventilation ports 57, the rotor ventilation hole 16, and the discharge ventilation ports 58. That is, even with the ventilation ports 57 and 58 for allowing the inside and the outside of the housing 11 to communicate with each other closed, the dynamo-electric machine 1 can be cooled, and the miniaturization of the dynamo-electric machine 1 is achieved.

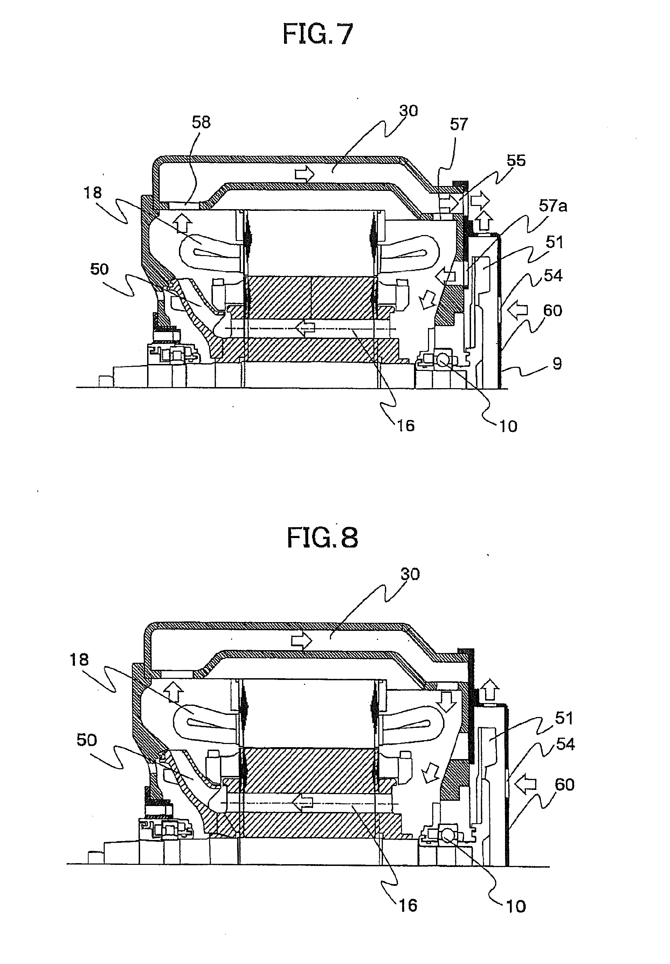

Next, a third embodiment of the present invention will be described using FIGs. 7 and 8. FIG. 7 is an axial cross-sectional view (a view showing a state where an intake ventilation passage 57a and a discharge port 55 are opened), and FIG. 8 is an axial cross-sectional view (a view showing a state where the intake ventilation passage 57a and the discharge port 55 are closed).

In the third embodiment, a ventilation passage 30 for circulating inside air is formed in a periphery of a housing 11. Also, an opening/closing member 60 and an end bracket 9 are made in an integral structure. Further, an intake port 54 and the discharge port 55 are formed in the same axial end (in a right end in FIGs. 7 and 8). It should be noted that, as shown in FIGs. 7 and 8, the intake ventilation passage 57a and the discharge port 55 are simultaneously opened/closed by turning the opening/closing member 60.

With the third embodiment, air outside a dynamo-electric machine 1 is introduced from the intake port 54 by an outer fan 51, passes through the intake ventilation passage 57a, and is introduced into the dynamo-electric machine 1. The air introduced into the dynamo-electric machine 1 passes through a rotor ventilation hole 16, and is sent in a direction of a coil end 18 by a fan 50. The air passed through the coil end 18 passes through the ventilation passage 30 for circulating the inside air, and is discharged from the discharge port 55.

When the ventilation passage 57a and the discharge port 55 are closed, the air in the dynamo-electric machine 1 is circulated by the fan 50. That is, the inside air passes through the ventilation passage 30 for circulating the inside air, passes through the side of the coil end 18, and passes through the rotor ventilation hole 16. Thereby, the inside air is circulated in the dynamo-electric machine 1. Herewith, since the inside of the dynamo-electric machine 1 is cooled, miniaturization of the dynamo-electric machine 1 is achieved. Also, the opening/closing member 60 and the end bracket 9 are made in the integral structure. Thereby, the number of components can be reduced. Further, the ventilation passage 57a and the discharge port 55 are formed in the same axial end. Thereby, the structure of the opening/closing member 60 can be simplified.

Even if the intake ventilation passage 57a and the discharge port 55 of the dynamo-electric machine 1 are closed by the opening/closing member 60, the outside air can be introduced into the housing 11 by the outer fan 51. Therefore, a bearing 10 or the like can be cooled.

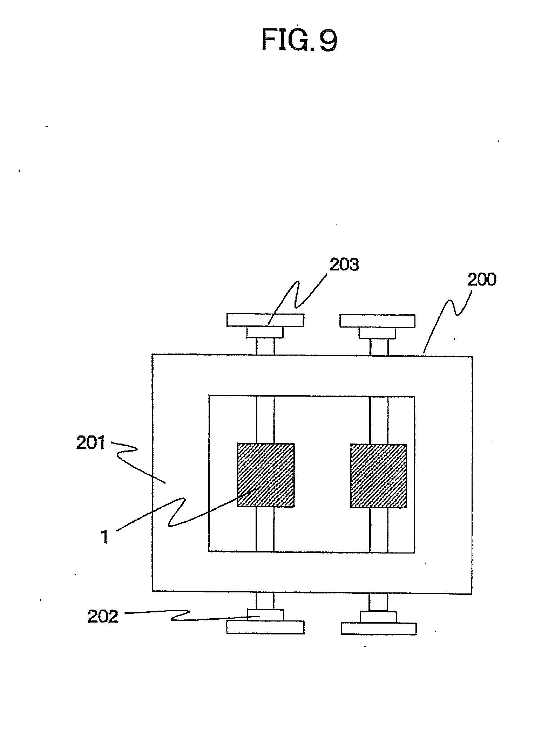

Next, a fourth embodiment of the present invention will be described using FIG. 9. FIG. 9 is a block configuration diagram of railway rolling stock 200 mounted with dynamo-electric machines 1 according to the fourth embodiment of the present invention.

In the railway rolling stock 200, a truck 201 having wheels 203 is mounted with the dynamo-electric machines 1 and speed-increasing gears 202, the wheels 203 being driven through the speed increasing gears 202 by the dynamo-electric machines 1. It should be noted that in FIG. 9, two dynamo-electric machines 1 are mounted to the truck 201; however, one dynamo-electric machine 1 or more than one dynamo-electric machine 1 can be mounted to drive the wheels 203.

It should be noted that as has been previously described, the dynamo-electric machine is used to drive the wheels of the railway rolling stock; however, the dynamo-electric machine can be used in any drive unit such as a drive unit for an electric construction machine. If the dynamo-electric machine is applied to an electric vehicle, and especially to the railway rolling stock, the dynamo-electric machine can be operated as an open motor during a snowless season. Therefore, miniaturization or high-output of the dynamo-electric machine is achieved.

It should be noted that the present invention is not limited to the above-described embodiments, and various alternatives are included. For example, the above-described embodiments have been described in detail for clearly describing the present invention, and the present invention is not necessarily limited to those that include all the above-described structures.

It should be also noted that a part of a structure in a certain embodiment can be replaced with a structure in the other embodiment, and the structure in the other embodiment can be added to the structure in a certain embodiment. Besides, the other structure can be added to, can be deleted from, and can be replaced with a part of the structure in each embodiment.

## Claims

1. A dynamo-electric machine comprising:
a stator (2) that has a stator winding (5) wound around a stator core (4);
a rotor (3) that has a rotor core (7) and a rotating shaft (8) rotatably retaining the rotor core (7); and
a housing (11) that surrounds a periphery and a side surface of the stator (2) and that houses the rotor (3) while rotatably retaining the rotor (3) with respect to the stator (2),
wherein the rotor (3) is provided with a cooling hole formed in the rotor core (7) in a direction of the rotating shaft (8) of the rotor (3), and a fan (50) arranged at one end of the rotating shaft (8); and
the housing (11) is provided with ventilation holes (57, 58) that are formed in one end and the other end in an axial direction of an outer peripheral surface of the housing (11) in order to allow the inside and the outside of the housing (11) to communicate with each other, a ventilation passage (30) connecting these ventilation holes (57, 58) outside the housing (11), and an opening/closing member (60) that is arranged in a discharge port (55, 55b) to the atmosphere of the ventilation passage (30).

2. The dynamo-electric machine according to claim 1, wherein when the opening/closing member (60) is closed, outside air sucked by the fan (50) is circulated through the cooling hole formed in the rotor (3) and the ventilation passage (30).

3. A dynamo-electric machine comprising:
a stator (2) that has a stator winding (5) wound around a stator core (4);
a rotor (3) that has a rotor core (7) and a rotating shaft (8) rotatably retaining the rotor core (7); and
a housing (11) that surrounds a periphery and a side surface of the stator (2) and that houses the rotor (3) while rotatably retaining the rotor (3) with respect to the stator (2),
wherein the rotor (3) is provided with a cooling hole formed in the rotor core (7) in a direction of the rotating shaft (8) of the rotor (3), and a fan (50) arranged at one end of the rotating shaft (8); and
the housing (11) is provided with an outside air ventilation passage (31) that is formed in an outer surface of the housing (11) and that sends outside air, ventilation holes (57, 58) that are formed in one end and the other end in an axial direction of the outer surface in order to allow the inside of the housing (11) and the outside air ventilation passage (31) to communicate with each other, and an opening/closing member (60) that opens/closes the ventilation holes (57, 58).

4. The dynamo-electric machine according to claim 3, wherein when the opening/closing member (60) is closed, the outside air sucked by the fan (50) is discharged to the outside air through the outside air ventilation passage (31).

5. A dynamo-electric machine comprising:
a stator (2) that has a stator winding (5) wound around a stator core (4);
a rotor (3) that has a rotor core (7) and a rotating shaft (8) rotatably retaining the rotor core (7); and
a housing (11) that surrounds a periphery and a side surface of the stator (2) and that houses the rotor (3) while rotatably retaining the rotor (3) with respect to the stator (2),
wherein the rotor core (7) is provided with a cooling hole formed in a direction of the rotating shaft (8) of the rotor core (7), and a fan (50) arranged at one end of the rotating shaft (8); and
the housing (11) is provided with ventilation holes (57, 58) that are respectively arranged in one end and the other end in an axial direction of an outer surface in order to allow the inside and the outside of the housing (11) to communicate with each other, a communication passage for allowing these ventilation holes (57, 58) to communicate with each other, an exhaust ventilation hole (58) arranged on an exhaust side of the communication passage, an intake ventilation hole (57) arranged in a housing side surface located on the exhaust side of the communication passage, and an opening/closing member (60) that opens/closes the exhaust ventilation hole (58) and the intake ventilation hole (57).

6. The dynamo-electric machine according to claim 5, wherein when the opening/closing member (60) is closed, outside air sucked by the fan (50) is circulated through the cooling hole formed in the rotor (3) and an outside air ventilation passage (31).

7. The dynamo-electric machine according to claims 4 or 5, wherein
the opening/closing member (60) for opening/closing the exhaust ventilation hole and the intake ventilation hole is integrated.

8. A dynamo-electric machine comprising:
a stator (2) that has a stator winding (5) wound around a stator core (4);
a rotor (3) that has a rotor core (7) and a rotating shaft (8) rotatably retaining the rotor core (7); and
a housing (11) that surrounds a periphery and a side surface of the stator (2) and that houses the rotor (3) while rotatably retaining the rotor (3) with respect to the stator (2),
wherein the rotor (3) is provided with a cooling hole formed in the rotor core (7) in a direction of the rotating shaft (8) of the rotor (3), and a fan (50) arranged at one end of the rotating shaft (8);
the housing (11) is provided with ventilation holes (57, 58) and an opening/closing member (60).

9. The dynamo-electric machine according to claim 8, comprising:
the housing (11) provided with ventilation holes (57, 58) that are formed in one end and the other end in an axial direction of an outer peripheral surface of the housing (11) in order to allow the inside and the outside of the housing (11) to communicate with each other, a ventilation passage (30) connecting these ventilation holes (57, 58) outside the housing (11), and the opening/closing member (60) that is arranged in a discharge port (55, 55b) to the atmosphere of the ventilation passage (30).

10. The dynamo-electric machine according to claim 9, wherein when the opening/closing member (60) is closed, outside air sucked by the fan (50) is circulated through the cooling hole formed in the rotor (3) and the ventilation passage (30).

11. The dynamo-electric machine according to claim 8, comprising:
the housing (11) is provided with an outside air ventilation passage (31) that is formed in an outer surface of the housing (11) and that sends outside air, ventilation holes (57, 58) that are formed in one end and the other end in an axial direction of the outer surface in order to allow the inside of the housing (11) and the outside air ventilation passage (31) to communicate with each other, and the opening/closing member (60) that opens/closes the ventilation holes (57, 58).

12. The dynamo-electric machine according to claim 11, wherein
when the opening/closing member (60) is closed, the outside air sucked by the fan (50) is discharged to the outside air through the outside air ventilation passage (31).

13. The dynamo-electric machine according to claim 8, comprising:
the housing (11) is provided with ventilation holes (57, 58) that are respectively arranged in one end and the other end in an axial direction of an outer surface in order to allow the inside and the outside of the housing (11) to communicate with each other, a communication passage for allowing these ventilation holes (57, 58) to communicate with each other, an exhaust ventilation hole (58) arranged on an exhaust side of the communication passage, an intake ventilation hole (57) arranged in a housing side surface located on the exhaust side of the communication passage, and the opening/closing member (60) that opens/closes the exhaust ventilation hole (58) and the intake ventilation hole (57).

14. The dynamo-electric machine according to claim 13, wherein
when the opening/closing member (60) is closed, outside air sucked by the fan (50) is circulated through the cooling hole formed in the rotor (3) and an outside air ventilation passage (31).

15. The dynamo-electric machine according to claims 13 or 14, wherein
the opening/closing member (60) for opening/closing the exhaust ventilation hole and the intake ventilation hole is integrated.
